Europäisches Patentamt

(19) European Patent Office

Office européen des brevets

(11) Numéro de publication: **0 330 563**
A1

(12) **DEMANDE DE BREVET EUROPEEN**

(21) Numéro de dépôt: **89400484.5**

(22) Date de dépôt: **21.02.89**

(51) Int. Cl.⁴: **A 23 L 1/212**
A 23 N 4/00, A 23 N 12/08

(30) Priorité: **22.02.88 FR 8802088**

(43) Date de publication de la demande:
**30.08.89 Bulletin 89/35**

(84) Etats contractants désignés:
**AT BE CH DE ES FR GB GR IT LI LU NL SE**

(71) Demandeur: **SOCIETE DE DEVELOPPEMENT
INDUSTRIEL AGRO ALIMENTAIRE
Montigny-Lengrain
F-02290 Vic sur Aisne (FR)**

**S.I.C.A. FRUITS DU VALOIS
Route de la Ferté Milon
F-02600 Villers Cotterets (FR)**

(72) Inventeur: **Tricoit Jean
33 rue du Chemin Vert
02200 Soissons (FR)**

**Morgat François
25 rue Saint Lazare
02460 La Ferte Milon (FR)**

(74) Mandataire: **Lanceplaine, Jean-Claude et al
CABINET LAVOIX 2, Place d'Estienne d'Orves
F-75441 Paris Cédex 09 (FR)**

(54) Procédé pour l'obtention d'aliments croustillants à base de fruits ou de légumes.

㉗ Procédé pour l'obtention d'aliments croustillants à base de fruits ou de légumes, caractérisé en ce qu'il consiste à étrogner ou à évider les fruits ou les légumes pour enlever la partie centrale ou noyau, à découper lesdits fruits ou légumes en rondelles ou quartiers selon la configuration du produit final à obtenir, puis à les faire défiler en continu dans un ensemble de chauffage et de séchage comportant une alternance de zones de chauffage et de refroidissement, et enfin à ensacher le produit ainsi obtenu.

EP 0 330 563 A1

Bundesdruckerei Berlin

# Description

## Procédé pour l'obtention d'aliments croustillants à base de fruits ou de légumes

La présente invention a pour objet un procédé pour l'obtention d'aliments croustillants à base de fruits ou de légumes. L'invention couvre également le produit alimentaire préparé selon le procédé.

On connaît des procédés de préparation d'aliments secs à base de fruits ou de légumes qui consistent à découper des aliments sous forme de tranches et à les faire frire sous pression réduit à une température généralement comprise entre 80° et 130°C dans un récipient à friture.

Cependant, les produits alimentaires préparés selon ce procédé ne présentent ni la qualité de croustillance requise, ni l'expansion suffisante, et restent quelque peu humides.

Un autre procédé connu, consiste à effectuer une friture supplémentaire sous pression réduite, ce qui entraîne une déshydratation complémentaire, mais dans ce cas les produits obtenus ont une surface dure et renferment une grande quantité d'huile.

Un objet de l'invention est de mettre en oeuvre un procédé industriel de préparation d'aliments croustillants à base de fruits ou de légumes qui évite les inconvénients précités.

Le procédé selon l'invention consiste tout d'abord à étrogner ou évider de leurs grains les fruits ou les légumes de façon à enlever la partie centrale ou le noyau. L'enlèvement de cette partie centrale permet de créer un puits permettant l'introduction d'un outil approprié pour le transfert selon une orientation déterminée du fruit ou du légume vers un dispositif de coupe automatique.

Ce dispositif découpe les fruits ou légumes en rondelles, ou quartiers, ou encore en morceaux géométriques selon la configuration du produit final à obtenir.

Ensuite, les rondelles ou morceaux ainsi préparés sont étalés et transférés par un dispositif transporteur vers un ensemble de cuisson et de séchage comportant une alternance de zones de chauffage et de refroidissement, par exemple par air chaud et froid, où ils défilent en continu.

La température des zones de chauffage est comprise entre 50° et 180°C, de préférence entre 70° et 150°C, et la température des zones de refroidissement est comprise entre 0° et 35°C, de préférence entre 15° et 30°C.

Ce passage en continu dans une succession de zones de chauffage et de refroidissement exerce de nombreux effets comme l'évaporation rapide et continue de l'humidité renfermée dans la substance initiale, si bien que le produit acquiert une bonne qualité de croustillance le rendant agréable à la consommation et un taux d'humidité tout à fait convenable, tout en évitant le brunissement.

Le nombre de zones de chauffage et de refroidissement dépend du produit et de la qualité de croustillance et du taux d'humidité que l'on désire obtenir.

Les produits traités selon le procédé de l'invention ont un taux de matières grasses compris entre 5 % et 30 %, de préférence entre 5 % et 15 %, et une humidité résiduelle comprise entre 2 % et 10 %, de préférence entre 3 % et 5 %.

Dans le cas de rondelles, l'épaisseur est comprise entre 1 et 4 mm.

Ensuite, les produits qui peuvent éventuellement avoir pris une forme gauche ou ondulée en cours de fabrication sont ensachés.

Le procédé selon l'invention s'applique à une très grande variété de fruits ou de légumes et présente l'avantage de ne pas dénaturer le goût de la substance alimentaire de base, et par conséquent d'obtenir des aliments secs et croustillants ayant la même saveur que la substance de base, ce qui permet pour une même variété d'aliments d'avoir une saveur différente.

## Revendications

1. Procédé pour l'obtention d'aliments croustillants à base de fruits ou de légumes, caractérisé en ce qu'il consiste :
- à étrogner ou à évider les fruits ou les légumes pour enlever la partie centrale ou le noyau,
- à découper lesdits fruits ou légumes en rondelles ou en quartiers selon la configuration du produit final à obtenir,
- puis à les faire défiler en continu dans un ensemble de chauffage et de séchage comportant une alternance de zones de chauffage et de refroidissement,
- et enfin à ensacher le produit ainsi obtenu.

2. Procédé selon la revendication 1, caractérisé en ce que la température des zones de chauffage est comprise entre 50° et 180°C, et de préférence entre 70° et 150°C.

3. Procédé selon la revendication 1, caractérisé en ce que la température des zones de refroidissement est comprise entre 0° et 35°C, et de préférence entre 15° et 30°C.

4. Produit alimentaire croustillant à base de fruits ou de légumes, caractérisé en ce qu'il a un taux de matières grasses compris entre 5 % et 30 %, de préférence entre 5 % et 15 %, et une humidité résiduelle comprise entre 2 % et 10 %, de préférence entre 3 % et 5 %.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 514 428  (R.W. GLASS et al.) <br> * revendications 1-6 * <br> --- | 1,2 | A 23 L    1/212 <br> A 23 N    4/00 <br> A 23 N   12/08 |
| A | US-A-3 510 314  (R.F. LIMA et al.) <br> * revendications 1-5 * <br> --- | 1,2 | |
| A | GB-A-1 288 532  (E.A. MCATEER) <br> * revendications 1-5 * <br> --- | 1 | |
| A | GB-A-1 030 821  (COLGATE-PALMOLIVE CO.) <br> * page 3, exemple 1, revendications 1-8 * <br> --- | 1,2 | |
| A | FR-A-2 322 554  (FILPER CORP.) <br> * revendications 1-6 * <br> ----- | 1 | |
| | | | **DOMAINES TECHNIQUES RECHERCHES (Int. Cl.4)** <br><br> A 23 L    1/00 <br> A 23 N    4/00 <br> A 23 N   12/00 |

Le présent rapport a été établi pour toutes les revendications

| Lieu de la recherche | Date d'achèvement de la recherche | Examinateur |
|---|---|---|
| BERLIN | 17-05-1989 | SCHULTZE D |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)